# FASCICULE DE BREVET EUROPEEN

(11) **EP 3 397 886 B1**
(45) Date de publication et mention de la délivrance du brevet: **26.10.2022**
(21) Numéro de dépôt: 16819951.1
(22) Date de dépôt: 29.12.2016
(51) Int. Cl.: F16L 33/01

(54) **EMBOUT DE CONNEXION D'UNE LIGNE FLEXIBLE, LIGNE FLEXIBLE ET PROCÉDÉ DE MONTAGE ASSOCIÉS**
VERBINDUNGSSPITZE FÜR EINE FLEXIBLE LEITUNG UND ZUGEHÖRIGE FLEXIBLE LEITUNG UND MONTAGEVERFAHREN
CONNECTION TIP FOR A FLEXIBLE LINE, AND ASSOCIATED FLEXIBLE LINE AND MOUNTING METHOD

(30) Priorité: 29.12.2015 FR 1563440
(43) Date de publication de la demande: 07.11.2018
(73) Titulaire: TECHNIP N-POWER, 92400 Courbevoie (FR)
(72) Inventeur: PHILLIPS, Paul, 76230 Bois Guillaume (FR); CAICEDO, Juan, 76340 Saint Romain De Colbosc (FR)
(74) Mandataire: Lavoix
(86) Numéro de dépôt international: PCT/EP2016/082818
(87) Numéro de publication internationale: WO 2017/114888

(56) Documents cités:
- WO-A1-2013/083597
- FR-A1- 2 816 389
- FR-A1- 3 016 020
- US-A- 5 860 682

## Description

La présente invention concerne un embout selon le préambule de la revendication 1.

La ligne flexible est avantageusement une conduite flexible de type non liée (« unbonded » en anglais) destinée au transport d'hydrocarbures à travers une étendue d'eau, tel qu'un océan, une mer, un lac ou une rivière. En variante, la ligne flexible est un ombilical renforcé par des éléments d'armure ou encore un câble.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Certaines de ces conduites sont utilisées dans des conditions très sévères. Ainsi, les hydrocarbures transportés peuvent présenter une pression et une température très élevées, par exemple une pression comprise entre 500 bars et 1500 bars, et une température comprise entre 110°C et 130°C. De plus, dans le cas où la conduite est immergée à grande profondeur, celle-ci doit être capable de résister à une pression externe très élevée, par exemple de l'ordre de 250 bars si la conduite est immergée à 2500 mètres de profondeur.

Les conduites destinées aux grandes profondeurs doivent aussi résister aux très fortes tensions, couramment plusieurs dizaines de tonnes, auxquelles elles sont soumises en service et/ou lors de leur installation en mer.

En outre, dans le cas où l'ensemble de surface est flottant et mobile en fonction des conditions de mer, les conduites montantes (« risers » en anglais) reliant le fond marin à l'ensemble de surface peuvent parfois être soumises à des millions de cycles de variation de courbure. Ces conduites montantes doivent donc aussi être capables de résister durablement à des sollicitations dynamiques en fatigue.

Les embouts de connexion, qui sont particulièrement sollicités, doivent eux aussi être conçus pour résister à de telles conditions de service.

Cependant, les embouts de conduites flexibles existants présentent parfois des zones de faiblesse au niveau du raccordement de la voûte de pression de la conduite flexible à l'embout. De telles zones de faiblesse peuvent engendrer un déplacement axial voire une désolidarisation de la voûte de pression par rapport à l'embout.

Le document FR 2 816 389 A décrit un embout de fixation pour une conduite tubulaire.

Le document FR 3 016 020 A décrit une méthode de montage d'un embout de fixation d'une conduite tubulaire et une installation pour la mettre en œuvre.

Un but de l'invention est de diminuer les risques de déplacement axial et/ou rupture des voûtes de pression de conduites flexibles au niveau des embouts desdites conduites.

À cet effet, l'invention a pour objet un embout du type précité, comprenant en outre les caractéristiques de la partie caractérisante de la revendication 1.

L'embout selon l'invention peut comprendre l'une ou plusieurs des caractéristiques des revendications 2 à 10, prise(s) isolément ou suivant toute combinaison techniquement possible selon les revendications.

L'invention a aussi pour objet une ligne flexible selon la revendication 11.

L'invention a également pour objet un procédé de montage d'un embout selon la revendication 12.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'un tronçon central d'une conduite flexible,
- la figure 2 est une vue partielle, prise en demi-coupe suivant un plan axial médian, de l'embout de la conduite de la figure 1 selon un premier mode de réalisation de l'invention,
- la figure 3 est une vue en perspective d'un système de blocage dans l'embout de la figure 2,
- la figure 4 est une vue, prise en coupe suivant un plan axial médian, des parties pertinentes d'un embout de conduite flexible selon un deuxième mode de réalisation de l'invention,
- la figure 5 est une vue, prise en coupe suivant un plan axial médian, des parties pertinentes d'un embout de conduite flexible selon un troisième mode de réalisation de l'invention, et
- la figure 6 est une vue, prise en coupe suivant un plan axial médian, des parties pertinentes d'un embout de conduite flexible selon un quatrième mode de réalisation de l'invention.

Dans tout ce qui suit, les termes « extérieur » et « intérieur » s'entendent généralement de manière radiale par rapport à un axe X-X' de la conduite, le terme « extérieur » s'entendant comme relativement plus éloigné radialement de l'axe X-X' et le terme « intérieur » s'étendant comme relativement plus proche radialement de l'axe X-X' de la conduite.

Les termes « avant » et « arrière » s'entendent de manière axiale par rapport à un axe X-X' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

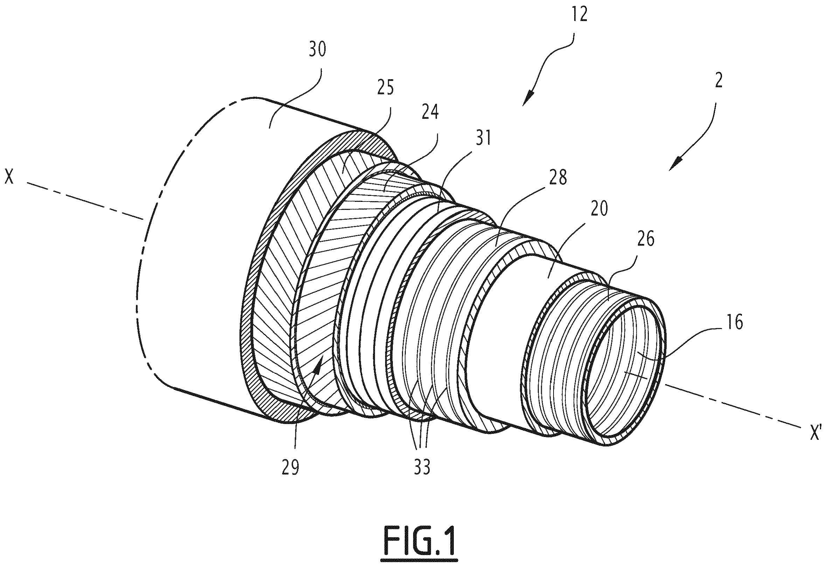

Un premier exemple de ligne flexible 2 est illustré partiellement sur la figure 1. Dans l'exemple décrit ci-après, la ligne flexible 2 est une conduite flexible. En variante, la ligne flexible 2 est un câble ou un ombilical.

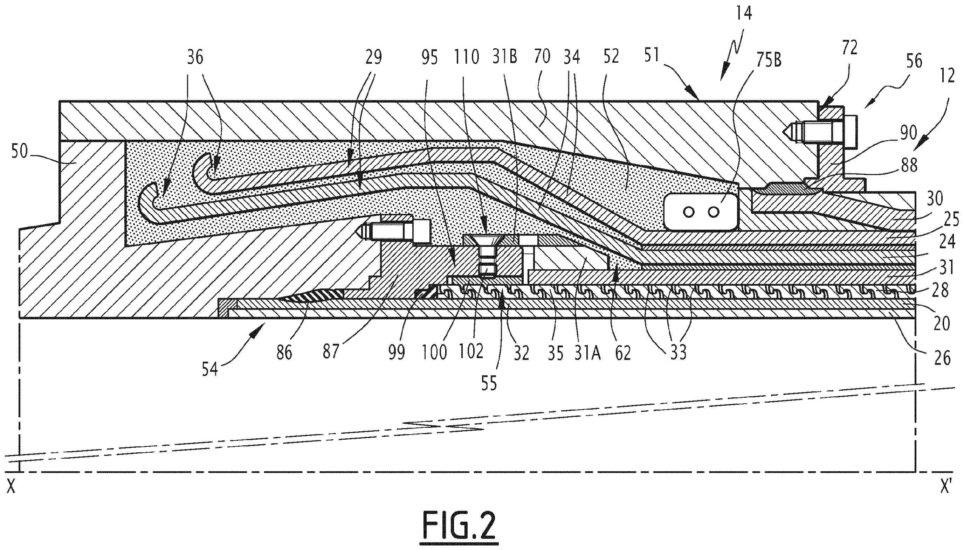

La conduite flexible 2 comporte un tronçon central 12 illustré en partie sur la figure 1. Elle comporte, à chacune des extrémités axiales du tronçon central 12, un embout d'extrémité 14 dont les parties pertinentes sont représentées sur la figure 2. Sur la figure 2, outre l'embout 14, est représentée une partie du tronçon central 12 adjacent à l'embout 14.

En référence à la figure 1, la conduite 2 délimite un passage central 16 de circulation d'un fluide, avantageusement d'un fluide pétrolier. Le passage central 16 s'étend suivant un axe X-X', entre l'extrémité amont et l'extrémité aval de la conduite 2. Il débouche à travers les embouts 14.

La conduite flexible 2 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont avantageusement raccordés entre eux par la conduite flexible 2.

La conduite flexible 2 est de préférence une conduite « non liée » (désignée par le terme anglais « unbonded »).

Au moins deux couches adjacentes de la conduite flexible 2 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 2 délimite une pluralité de couches concentriques autour de l'axe X-X', qui s'étendent continûment le long du tronçon central 12 jusqu'aux embouts 14 situés aux extrémités de la conduite.

Dans les exemples illustrés sur les figures 1 et 2, la conduite 2 comporte au moins une première gaine tubulaire 20 à base de matériau polymère constituant avantageusement une gaine de pression.

La conduite 2 comporte en outre au moins une couche d'armures de traction 24, 25 disposée extérieurement par rapport à la gaine de pression 20.

Dans cet exemple, la conduite 2 comporte en outre une carcasse interne 26 disposée à l'intérieur de la gaine de pression 20.

La conduite 2 comporte aussi une voûte de pression 28, 31 intercalée entre la gaine de pression 20 et la ou les couches d'armures de traction 24, 25.

Dans le mode de réalisation illustré sur les figures 1 et 2, la voûte de pression 28, 31 est constituée de deux couches superposées.

La couche la plus interne de la voûte de pression 28, 31 est la voûte de pression agrafée 28 (« interlocked pressure vault » en langue anglaise) qui est en contact avec la gaine de pression 20. La voûte de pression agrafée 28 est formée d'un ou plusieurs fils enroulés hélicoïdalement à pas court pour former des spires agrafées entre elles. L'agrafage entre spires adjacentes a pour fonction de contrôler les jeux entre spires afin de limiter le phénomène de fluage de la gaine de pression 20 à l'intérieur de ces jeux.

La couche la plus externe de la voûte de pression 28, 31 est une couche de renfort appelée frette 31 (« back-up pressure vault » en langue anglaise). La frette 31 est formée d'un ou plusieurs fils non agrafés enroulés hélicoïdalement à pas court, par exemple des fils de section sensiblement rectangulaire. La frette 31 a pour fonction de renforcer la voûte de pression agrafée 28 pour accroître la résistance à la pression de la conduite 2. Les conduites destinées à transporter des hydrocarbures présentant une pression très élevée, comportent généralement une telle frette 31. Le document US 6 415 825 décrit un exemple de conduite flexible comportant une voûte de pression agrafée et une frette.

Par « enroulé à pas court », on entend que la valeur absolue de l'angle d'hélice est proche de 90°, typiquement comprise entre 75° et 90°.

En outre, la conduite 2 comporte une gaine externe 30 entourant les couches d'armures de traction 24, 25 et destinée à la protection des couches internes de la conduite 2.

La gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 millimètres (mm) et 20 mm.

La gaine de pression 20 comporte un tronçon d'extrémité 32 inséré dans l'embout 14.

La carcasse 26 est formée par exemple d'un feuillard métallique profilé, enroulé en spirale. Les spires du feuillard sont avantageusement agrafées les unes aux autres. La fonction principale de la carcasse 26 est de reprendre les efforts radiaux d'écrasement.

La carcasse 26 est ici totalement métallique.

Dans cet exemple, la carcasse 26 est disposée à l'intérieur de la gaine de pression 20. La conduite est alors désignée par le terme anglais « rough bore » en raison de la géométrie de la carcasse 26.

La carcasse 26 est propre à entrer en contact avec le fluide circulant dans la gaine de pression 20.

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

La fonction principale de la voûte de pression 28, 31 est de reprendre les efforts radiaux liés à la pression régnant à l'intérieur de la gaine de pression 20.

La voûte de pression agrafée 28 définit au moins une rainure 33 en forme d'hélice sur toute sa longueur. La rainure 33 est notamment illustrée sur les figures 1 et 2.

La voûte de pression agrafée 28 est, par exemple, formée d'un fil profilé métallique entouré en hélice autour de la gaine 20. Le fil profilé présente généralement une géométrie complexe, notamment en forme de Z, de T, de U, de K, de X ou de I.

La voûte de pression agrafée 28 est, par exemple, enroulée en hélice à pas court autour de la gaine de pression 20, c'est-à-dire avec un angle d'hélice de valeur absolue proche de 90°, typiquement compris entre 75° et 90°.

La voûte de pression agrafée 28 présente une région d'extrémité 35 insérée dans l'embout 14, à l'extérieur du tronçon d'extrémité 32 de la gaine de pression 20. Le tronçon d'extrémité 32 de la gaine de pression 20 s'étend axialement vers l'avant au-delà de la région d'extrémité 35 de la voûte de pression agrafée 28.

La conduite flexible 2 selon l'invention comprend au moins une couche d'armures 24, 25 formée d'un enroulement hélicoïdal d'au moins un élément d'armure 29 allongé.

Dans l'exemple représenté sur la figure 2, la conduite flexible 2 comporte une pluralité de couches d'armures 24, 25, notamment une couche d'armures intérieure 24, appliquée sur la voûte de pression 28, 31 et une couche d'armures extérieure 25 autour de laquelle est disposée la gaine extérieure 30.

Chaque couche d'armures 24, 25 comporte des éléments d'armure 29 longitudinaux enroulés à pas long autour de l'axe X-X' de la conduite.

Par « enroulé à pas long », on entend que la valeur absolue de l'angle d'hélice est inférieure à 60°, et est typiquement comprise entre 25° et 55°.

La fonction principale des couches d'armures 24, 25 est de reprendre les efforts axiaux de traction exercés sur la conduite 2, notamment ceux liés au poids pendu dans le cas d'une conduite montante,

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier ferromagnétique, ou par des rubans en matériau composite, par exemple des rubans renforcés de fibres de carbone. Dans l'exemple représenté sur la figure 2, les éléments d'armure 29 sont, par exemple, formés par des fils métalliques en acier ferromagnétique.

Les éléments d'armure 29 présentent chacun un tronçon d'extrémité 34 introduit dans l'embout 14. Le tronçon d'extrémité 34 s'étend jusqu'à une extrémité libre 36 disposée dans l'embout 14. Il présente avantageusement une trajectoire pseudohélicoïdale d'axe X-X' dans l'embout 14, l'hélice s'enroulant sur une enveloppe conique.

Dans l'exemple représenté sur la figure 2, pour chaque couche d'armures 24, 25, les tronçons d'extrémité 34 des éléments d'armure 29 s'étendent de manière divergente à l'écart de l'axe X-X', puis convergente vers l'axe X-X' depuis un point de décollement arrière 62 vers l'extrémité avant libre 36.

La gaine externe 30 est destinée à empêcher la perméation de fluide depuis l'extérieur de la conduite flexible 2 vers l'intérieur. Elle est avantageusement réalisée en matériau polymère, notamment à base d'un polyoléfine, tel que du polyéthylène, ou à base d'un polyamide, tel que du PA11 ou du PA12.

L'épaisseur de la gaine externe 30 est par exemple comprise entre 5 mm et 15 mm.

La frette 31 est disposée extérieurement par rapport à la voûte de pression agrafée 28. La frette 31 s'interpose entre la voûte de pression agrafée 28 et les éléments d'armure 29 de la première couche d'armure 24.

L'épaisseur de la frette 31 est par exemple comprise entre 5 mm et 30 mm.

La frette 31 comprend une bague d'appui 31A montée en prise autour de la frette 31.

Comme illustré par la figure 2, outre le tronçon d'extrémité 32 de la gaine de pression 20, les tronçons d'extrémité 34 des éléments d'armure 29, et la région d'extrémité 35 de la voûte de pression agrafée 28, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 34 des éléments d'armure 29, et de la région d'extrémité 35 de la voûte de pression agrafée 28.

L'embout 14 comporte, en outre, à l'avant de la chambre de réception 52, un ensemble avant 54 d'étanchéité autour de la gaine de pression 20 et un système de blocage 55 de la voûte de pression agrafée 28 par rapport à la voûte d'extrémité 50. L'embout 14 comprend, également, un ensemble arrière 56 d'étanchéité autour de la gaine extérieure 30.

Dans cet exemple, la voûte d'extrémité 50 est destinée à raccorder la conduite 2 à un autre embout de connexion 14 ou à des équipements terminaux, avantageusement par l'intermédiaire d'une bride d'extrémité.

La voûte d'extrémité 50 présente un alésage central destiné à recevoir l'extrémité de la gaine de pression 20 et à permettre l'écoulement du fluide circulant à travers le passage central 16 vers l'extérieur de la conduite 2.

Le capot 51 comporte une paroi périphérique 70 tubulaire s'étendant autour de l'axe X-X'. La paroi périphérique 70 présente un bord arrière 72 s'étendant axialement vers l'arrière au-delà de la voûte d'extrémité 50.

Le capot 51 délimite la chambre 52 radialement vers l'extérieur. La voûte d'extrémité 50 et le tronçon d'extrémité 32 de la gaine de pression 20 délimitent la chambre 52 radialement vers l'intérieur.

La chambre de réception 52 est avantageusement remplie d'un matériau de remplissage destiné à ancrer les tronçons d'extrémité 34 des éléments d'armures 24, 25 dans la chambre 52. Le matériau de remplissage est par exemple une résine époxy telle qu'une résine Araldite^{®}.

L'ensemble avant 54 d'étanchéité et la région d'extrémité 35 de la voûte de pression agrafée 28 sont situés radialement vers l'intérieur par rapport aux éléments d'armure 29. L'ensemble arrière d'étanchéité 56 délimite axialement la chambre 52 vers l'arrière. Une bague 75B de maintien des éléments d'armure 29 est située entre l'extrémité avant de la gaine externe 30 et l'extrémité avant de la première couche d'armures 25.

L'ensemble avant d'étanchéité 54 est situé à l'avant de l'embout 14, en contact avec la voûte d'extrémité 50.

Il comporte une bague avant 86 de sertissage, destinée à venir en prise sur la gaine de pression 20, et une bride avant 87 de sertissage de la bague 86, représentées schématiquement sur la figure 2.

La bride avant 87 est rapportée sur une surface transversale arrière de la voûte d'extrémité 50. Elle est disposée extérieurement par rapport à la région d'extrémité 35 de la voûte de pression agrafée 28.

La bride avant de sertissage 87 pousse axialement la bague avant de sertissage 86 vers l'avant pour que celle-ci exerce une pression radiale sur le tronçon d'extrémité 32 de la gaine de pression 20. En particulier, le déplacement de la bague avant 86 contre une surface inclinée de la voûte 50 déplace radialement la bague avant 86 de sertissage, de sorte que cette dernière est en prise radialement sur la gaine de pression 20.

La bride avant de sertissage 87 est avantageusement raccordée à la bague d'appui 31A via des tirants de raccordement 31B.

Comme illustré sur les figures 1 à 3, le système de blocage 55 comprend une bague d'extrémité 99 de la voûte de pression agrafée 28 et un ensemble de retenue incurvé 100 monté radialement entre la région d'extrémité 35 de la voûte de pression agrafée 28 et la bride avant de sertissage 87.

Le système de blocage 55 comprend, en outre, des organes 102 de verrouillage axial de l'ensemble de retenue 100 sur la bride avant de sertissage 87.

Dans le mode de réalisation illustré sur la figure 2, l'ensemble de retenue 100 est inséré dans un épaulement arrière 95 défini par la bride avant de sertissage 87.

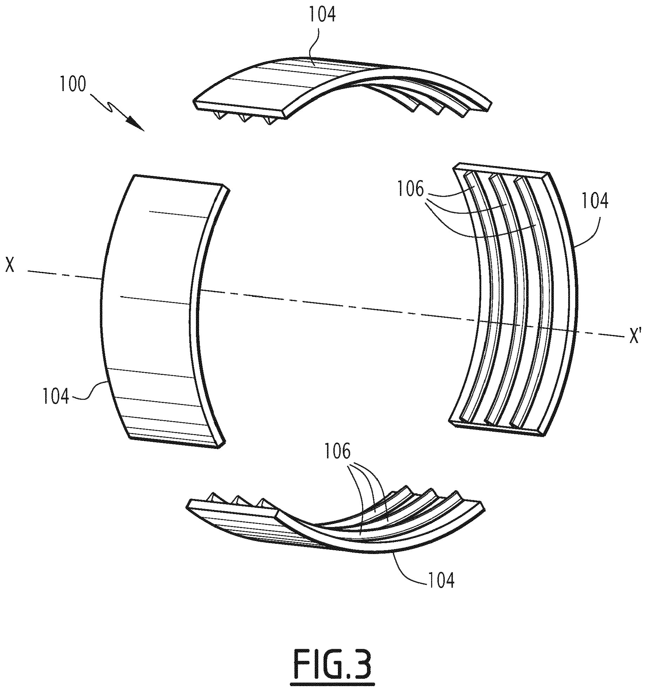

Comme visible sur les figures 1 et 3, l'ensemble de retenue 100 comporte au moins deux organes 104 circonférentiels disjoints.

Dans l'exemple illustré sur les figures 1 à 3, l'ensemble de retenue 100 comprend quatre organes circonférentiels 104 disjoints.

Chaque organe circonférentiel 104 a la forme d'une plaque courbée. L'étendue angulaire autour de l'axe X-X' de chaque organe circonférentiel 104 est inférieure à 120° de préférence inférieure à 90°.

Les organes circonférentiels 104 sont répartis le long du périmètre d'une même section transversale de la voûte de pression agrafée 28. Ainsi, les organes circonférentiels 104 sont disposés adjacents les uns aux autres sur le pourtour de la voûte de pression agrafée 28.

Les organes circonférentiels 104 sont espacés circonférentiellement les uns des autres sur la voûte de pression agrafée 28 d'au plus 10 millimètres.

Comme visible sur la figure 3, chaque organe circonférentiel 104 comprend des nervures 106 complémentaires des tours successifs de la rainure 33 de la voûte de pression agrafée 28. Les nervures 106 font saillie radialement vers l'axe X-X'. En particulier, les nervures 106 sont séparées axialement d'une distance correspondant au pas de la rainure 33.

De préférence, les nervures 106 des organes circonférentiels 104 de l'ensemble de retenue 100 sont insérées sans être vissées dans la rainure 33 de la voûte de pression agrafée 28.

Dans cet exemple, les organes circonférentiels 104 sont réalisés en acier au carbone.

Les organes de verrouillage 102 traversent la bride avant de sertissage 87 via des passages 110 et font saillie dans l'épaulement arrière 95 défini par la bride avant de sertissage 87.

Avantageusement, chaque organe circonférentiel 104 de l'ensemble de retenue 100 est en vis-à-vis d'au moins un passage 110 de la bride avant de sertissage 87 dans lequel est inséré un organe de verrouillage 102. Ainsi, chaque organe circonférentiel 104 est maintenu appliqué contre la voûte de pression agrafée 28 par l'intermédiaire d'au moins un organe de verrouillage 102.

Les organes de verrouillage 102 sont avantageusement choisis parmi des boulons, des vis sans tête ,des vis à bout plat et des vis à bout en forme de cuvette. Les organes de verrouillages 102 sont par exemple des vis de pression sans tête dénommées « set screw » en langue anglaise.

Dans le mode de réalisation illustré sur la figure 2, les passages 110 sont des passages filetés traversant la bride avant de sertissage 87 et les organes de verrouillage 102 sont des vis à bout plats ou à bout en forme de cuvette vissées dans les passages 110. Les extrémités à bout plat ou à bout en forme de cuvette des vis exercent une pression axiale sur les organes circonférentiels 104 de l'ensemble de retenue 100.

L'ensemble arrière d'étanchéité 56 est placé à l'arrière de l'ensemble avant d'étanchéité 54.

Il comporte au moins une bague arrière de sertissage 88 sertissant la gaine externe 30, et une bride arrière 90 de serrage de la bague arrière 88, fixée sur le capot 51.

Le procédé de montage de l'embout 14 de connexion de la ligne flexible 2 va maintenant être décrit.

Initialement, le procédé comprend la fourniture de la ligne flexible 2. Un tronçon d'extrémité 32 de la gaine de pression 20 est dénudé.

La région d'extrémité 35 de la voûte de pression agrafée 28, disposée extérieurement par rapport au tronçon d'extrémité 32 de la gaine de pression 20, est également dénudée.

La bague d'appui 31A de la frette 31 est placée autour de celle-ci.

L'ensemble de retenue 100 est alors monté sur la région d'extrémité 35 de la voûte de pression agrafée 28.

A cet effet, les organes circonférentiels 104 sont plaqués radialement contre la région d'extrémité 35 en étant espacés sur le périmètre d'une même section de la région 35. Les nervures 106 des organes circonférentiels 104 de l'ensemble de retenue 100 s'insèrent radialement sans se visser dans la rainure 33 de la voûte de pression agrafée 28.

Puis, la bride avant de sertissage 87 est montée autour de la région d'extrémité 35 de la voûte de pression agrafée 28, de sorte que l'ensemble de retenue 100 soit contenu dans l'épaulement arrière 95 défini par la bride avant de sertissage 87.

Puis, la bague avant de sertissage 86 est insérée autour du tronçon d'extrémité 32 de la gaine de pression 20 à l'avant de la bride avant de sertissage 87.

La voûte d'extrémité 50 est ensuite introduite autour du tronçon d'extrémité 32 de la gaine de pression 20.

La bride avant de sertissage 87 est alors poussée à force jusqu'à venir en butée contre la face arrière de la voûte d'extrémité 50 provoquant le sertissage de la gaine de pression 20. Le déplacement axial de la bride avant de sertissage 87 vers la face arrière de la voûte d'extrémité 50 est avantageusement réalisé à l'aide d'un outillage muni de vérins hydrauliques connu de l'homme du métier. Une fois le sertissage de la gaine de pression terminé, la bride avant de sertissage est fixée à la voûte d'extrémité 50 à l'aide de plusieurs vis.

Les organes de verrouillage 102 sont, ensuite, insérés dans le passage 110 de la bride avant de sertissage 87 pour exercer une pression sur les organes circonférentiels 104 de l'ensemble de retenue 100 et maintenir ainsi l'ensemble de retenue 100 dans l'épaulement arrière 95 défini par la bride avant de sertissage 87.

Une fois cette opération terminée, la région d'extrémité 35 de la voûte de pression agrafée 28 se retrouve fixée à la voûte d'extrémité 50 de l'embout 14, cette fixation se faisant par l'intermédiaire de la bride avant de sertissage 87, des vis reliant la bride avant de sertissage 87 à la voûte d'extrémité 50, des organes circonférentiels 104 et de l'ensemble de retenue 100.

Les tirants de liaison 31B entre la bride avant de sertissage 87 et la bague d'appui 31A sont alors mis en place et sont fixés respectivement sur la bride avant 87 et sur la bague d'appui 31A.

Ainsi, le système de blocage 55 bloque la voûte de pression agrafée 28 par rapport à la voûte d'extrémité 50, ce qui réduit les risques de déplacement relatif, voire de perte d'étanchéité de l'embout 14.

En effet, lorsque la conduite 2 transporte un fluide de pression élevée, la pression exercée par ce fluide a pour effet d'exercer au niveau de l'embout 14 un effort axial tendant à éloigner l'embout 14 du tronçon central 12. Un tel effort d'arrachement appelé effet de fond, se cumule éventuellement avec l'effet d'arrachement lié au poids pendu de la conduite dans le cas où cette dernière est utilisée pour une liaison montante (« riser » en langue anglaise). Ces efforts d'arrachement sont repris par les armures de traction 24, 25 et par l'ancrage de celles-ci dans l'embout 14. Cependant, dans il a été constaté que dans des conditions extrêmes de température et de pression, le système d'ancrage des armures de traction 24, 25 peut ne pas être suffisant pour immobiliser parfaitement l'extrémité de la voûte de pression agrafée 28 vis-à-vis de l'embout 14 et notamment vis-à-vis de la bride avant de sertissage 87. Or, en l'absence d'immobilisation parfaite, le jeu séparant l'extrémité de la voûte de pression agrafée 28 de la face arrière de la bride de sertissage 87 est susceptible d'augmenter légèrement, ce qui pourrait dans des conditions extrêmes de température et de pression conduire à un fluage excessif de la gaine de pression 20 à l'intérieur de ce jeu excessif, et par suite à une perte d'étanchéité de l'embout 14. En bloquant parfaitement l'extrémité de la voûte de pression agrafée 28 vis-à-vis de l'embout 14, la présente invention évite la formation d'un jeu excessif et améliore donc la fiabilité de l'embout 14 notamment lorsque la conduite transporte des hydrocarbures présentant une pression et une température très élevées (par exemple une pression de 1500 bars et une température de 150°C).

L'ensemble de retenue 100 formé d'organes circonférentiels 104 disjoints s'adapte à différentes géométries de voûtes de pression agrafées 28. En particulier, un tel ensemble de retenue 100 est adaptable à des voûtes de pression présentant des défauts de circularité.

L'insertion des nervures 106 de l'ensemble de retenue 100 dans les rainures 33 de la voûte de pression agrafée 28 sans vissage facilite la fabrication de la voûte de pression agrafée 28 et de l'ensemble de retenue 100, ainsi que le montage de l'ensemble de retenue 100 sur la voûte de pression agrafée 28.

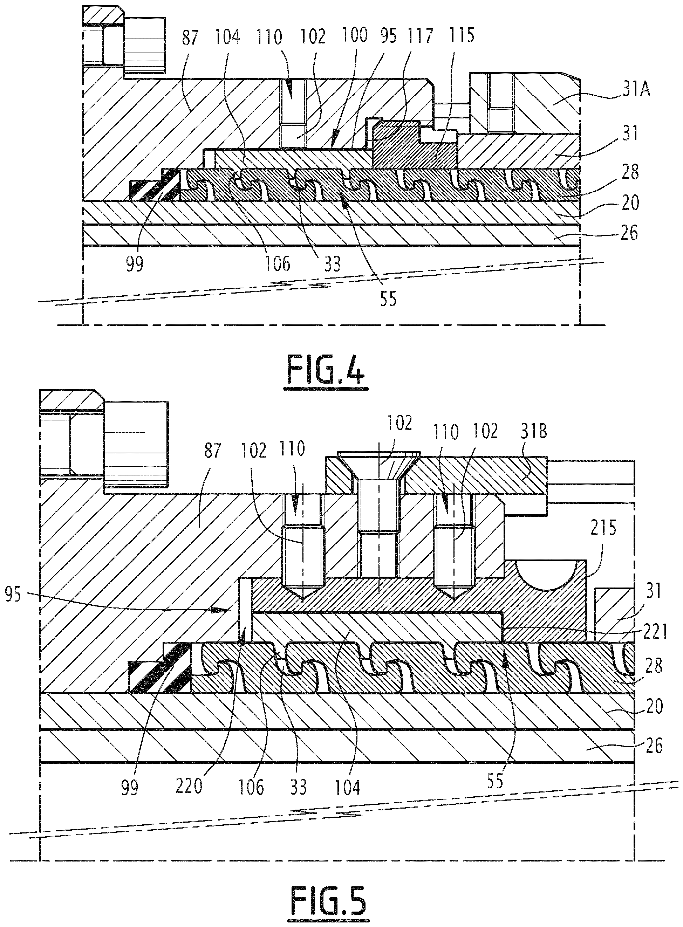

Selon un deuxième mode de réalisation tel que visible sur la figure 4, les éléments identiques à l'embout 14 selon le premier mode de réalisation décrit en regard de la figure 2 ne sont pas répétés. Seules les différences sont mises en évidence.

Le système de blocage 55 comprend une bague de maintien 115 disposée radialement entre la voûte de pression agrafée 28 et la bride avant de sertissage 87 à l'arrière de l'ensemble de retenue. La bague de maintien 115 est en contact avec l'ensemble de retenue 100.

La bride avant de sertissage 87 définit un épaulement extérieur 117 placé à l'arrière de l'épaulement arrière 95, l'épaulement extérieur 117 recevant la bague de maintien 115.

La bride avant 87 présente un filetage intérieur dans l'épaulement extérieur 117, pour permettre le vissage de la bague de maintien 115.

La bague de maintien 115 est interposée entre l'ensemble de retenue 100 et la frette 31.

Dans l'exemple de la figure 4, les organes de verrouillage 102 sont des vis.

Les étapes du procédé de montage de l'embout 14 selon le deuxième mode de réalisation illustré en figure 4 identiques aux étapes du procédé de montage selon le premier mode de réalisation illustré en figure 2 ne sont pas répétées. Seules les différences sont mises en évidence.

Le procédé de montage comprend la mise en place préalable de la bague de maintien 115, autour de la voûte de pression agrafée 28, à l'avant de la frette 31.

Puis, le procédé comprend la mise en place des organes circonférentiels 100 à l'avant de la bague de retenue 115.

Comme précédemment décrit, la voûte d'extrémité 50 est ensuite introduite autour de l'ensemble de retenue 100 pour que chaque organe circonférentiel entre dans l'épaulement 95.

La bague de retenue 115 est alors vissée dans l'épaulement extérieur 117.

Ainsi, dans cet exemple, l'ensemble de retenue 100 est bloqué aussi bien dans la direction transversale que longitudinale.

Selon un troisième mode de réalisation tel que visible sur la figure 5, les éléments identiques à l'embout 14 selon le premier mode de réalisation décrit en regard de la figure 2 ne sont pas répétés. Seules les différences sont mises en évidence.

Le système de blocage 55 comprend, en outre, une bague de retenue 215 disposée dans l'épaulement 95 entre l'ensemble de retenue 100 et la bride avant de sertissage 87. La bague de retenue 215 est disposée extérieurement par rapport à l'ensemble de retenue 100 et est appliquée sur l'ensemble de retenue 100.

La bague de retenue 215 est reçue dans l'épaulement arrière 95 conjointement avec l'ensemble de retenue 100.

La bague de retenue 215 forme avec la voûte de pression agrafée 28 un logement 220 de maintien de l'ensemble de retenue 100, l'ensemble de retenue 100 étant inséré dans le logement de maintien 220. La bague de retenue 215 définit une butée arrière 221 de blocage de l'ensemble de retenue 100 dans le logement 220.

La bague de retenue 215 est formée d'au moins deux parties de bagues assemblées l'une sur l'autre.

Les organes de verrouillage 102 traversent la bride avant de sertissage 87 via les passages 110 et font saillie dans l'épaulement arrière 95 de sorte à exercer une pression sur la bague avant de retenue 215. Ainsi, dans ce troisième mode de réalisation, les organes de verrouillage 102 sont en contact de la bague de retenue 215. L'ensemble de retenue 100 est quant à lui maintenu dans le logement de maintien 220 défini par la bague de retenue 215 par coopération avec la butée arrière 221.

Dans l'exemple de la figure 5, les organes de verrouillage 102 sont des vis sans tête et des vis à bout plats. Les vis sans tête permettent, par exemple, de bloquer la bague de retenue 215 et les vis à bout plat permettent de raccorder la bride avant de sertissage 87 à la bague d'appui 31A via les tirants de raccordement 31B disposés extérieurement par rapport à la bride avant 87 et la bague d'appui 31A.

Les étapes du procédé de montage de l'embout 14 selon le troisième mode de réalisation illustré en figure 5 identiques aux étapes du procédé de montage selon le premier mode de réalisation illustré en figure 2 ne sont pas répétées. Seules les différences sont mises en évidence.

Le procédé de montage comprend la mise en place des organes circonférentiels 104, comme décrit précédemment.

Les deux parties de la bague de retenue 215 sont alors montées autour des organes circonférentiels 104 pour couvrir les organes circonférentiels 104 de l'ensemble de retenue 100 et placer la butée 221 à l'arrière des organes circonférentiels 104.

La voûte d'extrémité 50 est alors mise en place sur l'ensemble de retenue 100 et la bague de maintien 215 s'insérant dans l'épaulement 95.

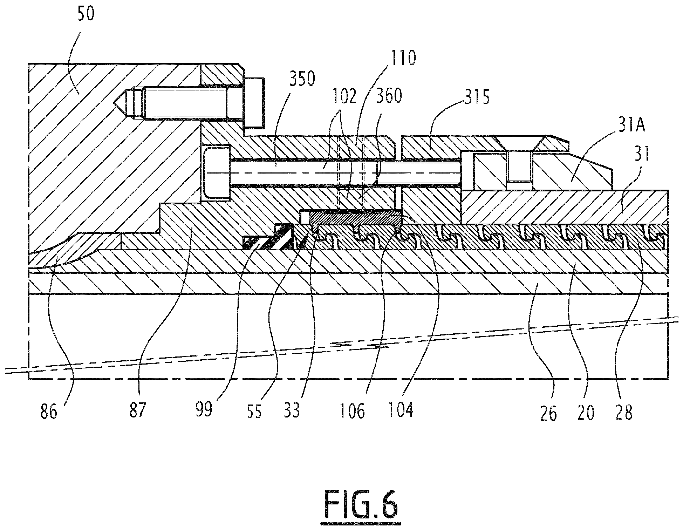

Selon un quatrième mode de réalisation tel que visible sur la figure 6, les éléments identiques à l'embout 14 selon le premier mode de réalisation décrit en regard de la figure 2 ne sont pas répétés. Seules les différences sont mises en évidence.

Le système de blocage 55 comprend une bague de retenue 315 disposée axialement entre la bride avant de sertissage 87 et l'extrémité de la frette 31. La bague de retenue 315 entoure la voûte de pression agrafée 28 et est en contact avec la face arrière l'ensemble de retenue 100.

Dans l'exemple de la figure 6, les organes de verrouillage 102 sont, d'une part, des vis 360 orientées radialement et, d'autre part, des vis 350 orientées longitudinalement. Les vis orientées longitudinalement 350 relient la bride avant de sertissage 87 à la bague de retenue 315 et ont pour fonction de bloquer longitudinalement la bague de retenue 350 en la maintenant en contact contre la face arrière de l'ensemble de retenue 100. Les vis orientées radialement 360 ont pour fonction principale d'assurer une bonne pénétration des nervures 106 de l'ensemble de retenue 100 dans la rainure 33 de la voûte de pression agrafée 28.

Les étapes du procédé de montage de l'embout 14 selon le deuxième mode de réalisation illustré en figure 6 identiques aux étapes du procédé de montage selon le premier mode de réalisation illustré en figure 2 ne sont pas répétées. Seules les différences sont mises en évidence.

Le procédé de montage comprend la mise en place préalable de la bague de retenue 315, autour de la voûte de pression agrafée 28, à l'avant de la frette 31.

Puis, le procédé comprend la mise en place des organes circonférentiels 100 et de la bride avant de sertissage à l'avant de la bague de retenue 315.

L'ensemble de retenue 100 est ensuite bloqué aussi bien dans la direction transversale que longitudinale en serrant les vis orientées radialement 360 et les vis orientées longitudinalement 350.

Puis la bague avant de sertissage 86 et la voûte d'extrémité sont mises en place autour de la gaine de pression 20.

Enfin, le sertissage de la gaine de pression 20 est effectué en rapprochant longitudinalement la voûte d'extrémité 50 de la bride avant de sertissage 87 jusqu'à ce que ces deux pièces soient en butée l'une contre l'autre.

L'homme du métier comprendra que des organes disjoints sont des organes n'ayant pas de liaison mécanique directe entre eux.

## Revendications

1. Embout (14) de connexion pour une ligne flexible (2) de transport de fluide, la ligne flexible (2) comprenant une gaine de pression (20), une voûte de pression agrafée (28) disposée extérieurement par rapport à la gaine de pression (20) et au moins une couche d'armures de traction (24, 25) disposée extérieurement par rapport à la voûte de pression agrafée (28), la couche d'armures (24, 25) comprenant une pluralité d'éléments d'armure (29), l'embout (14) comprenant :
- une région d'extrémité de la gaine de pression (20),
- une région d'extrémité (35) de la voûte de pression agrafée (28),
- au moins un tronçon d'extrémité (34) de chaque élément d'armure (29),
- une voûte d'extrémité (50) et un capot (51) fixé sur la voûte d'extrémité (50), la voûte d'extrémité (50) et le capot (51) délimitant entre eux une chambre (52) de réception de chaque tronçon d'extrémité (34) des éléments d'armure (29),
- une bride avant de sertissage (87) de la gaine de pression (20), la bride avant de sertissage (87) étant rapportée sur la voûte d'extrémité (50) et disposée extérieurement par rapport à la région d'extrémité (35) de la voûte de pression agrafée (28),
- un système de blocage (55) de la voûte de pression agrafée (28) par rapport à la voûte d'extrémité (50), le système de blocage (55) comprenant un ensemble de retenue incurvé (100) monté radialement entre la région d'extrémité (35) de la voûte de pression agrafée (28) et la bride avant de sertissage (87),
**caractérisé en ce que** l'ensemble de retenue (100) comporte au moins deux organes circonférentiels (104) disjoints, de préférence au moins trois organes circonférentiels (104) disjoints.

2. Embout (14) selon la revendication 1, dans lequel chaque organe circonférentiel (104) a la forme d'une plaque courbée.

3. Embout (14) selon la revendication 1 ou 2, dans lequel les organes circonférentiels (104) sont répartis le long du périmètre d'une même section transversale de la voûte de pression agrafée (28).

4. Embout (14) selon l'une quelconque des revendications 1 à 3, dans lequel les organes circonférentiels (104) sont espacés circonférentiellement les uns des autres sur la voûte de pression agrafée (28) d'au plus 10 millimètres.

5. Embout (14) selon l'une quelconque des revendications 1 à 4, dans lequel les organes circonférentiels (104) sont réalisés en acier au carbone.

6. Embout (14) selon l'une quelconque des revendications précédentes, dans lequel la voûte de pression agrafée (28) comprend au moins une rainure (33), l'ensemble de retenue (100) comprenant des nervures (106) complémentaires de la rainure (33).

7. Embout (14) selon la revendication 6, dans lequel les nervures (106) de l'ensemble de retenue (100) sont insérées sans être vissées dans la rainure (33) de la voûte de pression agrafée (28).

8. Embout (14) selon l'une quelconque des revendications précédentes, dans lequel le système de blocage (55) comporte des organes (102) de verrouillage axial de l'ensemble de retenue (100) sur la bride avant de sertissage (87) choisis avantageusement parmi des boulons, des vis sans tête, des vis à bout plat, et des vis à bout en forme de cuvette.

9. Embout (14) selon l'une quelconque des revendications précédentes, dans lequel le système de blocage (55) comprend une bague de maintien (115 ; 215) disposée entre la voûte de pression agrafée (28) et la bride avant de sertissage (87) et en contact avec l'ensemble de retenue (100).

10. Embout (14) selon la revendication 9, dans lequel la bague de maintien (215) forme avec la voûte de pression agrafée (28) un logement (220) de maintien de l'ensemble de retenue (100), l'ensemble de retenue (100) étant inséré dans le logement de maintien (220).

11. Ligne flexible (2) comprenant :
- au moins une gaine de pression (20),
- au moins une voûte de pression agrafée (28) disposée extérieurement par rapport à la gaine de pression (20),
- au moins une couche d'armures (24, 25) de traction disposée extérieurement par rapport à la voûte de pression agrafée (28), la couche d'armures (24, 25) comprenant une pluralité d'éléments d'armure (29),
- au moins un embout (14) selon l'une quelconque des revendications précédentes.

12. Procédé de montage d'un embout (14) selon l'une quelconque des revendications 1 à 10, le procédé comprenant :
- la fourniture de la région d'extrémité (35) de la voûte de pression agrafée (28) disposée autour de la gaine de pression (20),
- la mise en place de la bride avant de sertissage (87) autour de la région d'extrémité (35) de la voûte de pression agrafée (28),
- le montage de la bride avant de sertissage (87) sur la voûte d'extrémité (50),
**caractérisé en ce que** le procédé comprend, en outre, le montage du système de blocage (55) de la voûte de pression agrafée (28) par rapport à la voûte d'extrémité (50), le système de blocage (55) comprenant l' ensemble de retenue (100) incurvé monté radialement entre la région d'extrémité (35) de la voûte de pression agrafée (28) et la bride avant de sertissage (87), l'ensemble de retenue (100) comportant les au moins deux organes circonférentiels (104) disjoints, le procédé comprenant l'application sans vissage de chaque organe circonférentiel (104) sur la voûte de pression agrafée (28).

## Patentansprüche

1. - Anschlussstück (14) zum Verbinden einer flexiblen Leitung (2) zum Fluidtransport, die flexible Leitung (2) umfassend einen Druckmantel (20), eine gefalzte Druckwölbung (28), die in Bezug auf den Druckmantel (20) außen angeordnet ist, und mindestens eine Zugbewehrungsschicht (24, 25), die in Bezug auf die gefalzte Druckwölbung (28) außen angeordnet ist, die Bewehrungsschicht (24, 25) umfassend eine Vielzahl von Bewehrungselementen (29) umfasst, das Anschlussstück (14) umfassend:
- einen Endbereich des Druckmantels (20),
- einen Endbereich (35) der gefalzten Druckwölbung (28),
- mindestens einen Endabschnitt (34) von jedem Bewehrungselement (29),
- eine Endwölbung (50) und eine Haube (51), die an der Endwölbung (50) befestigt ist, wobei die Endwölbung (50) und die Haube (51) untereinander eine Kammer (52) zur Aufnahme von jedem Endabschnitt (34) der Bewehrungselemente (29) begrenzen,
- einen vorderen Bördelflansch (87) des Druckmantels (20), wobei der vordere Bördelflansch (87) an der Endwölbung (50) angebracht ist und in Bezug auf den Endbereich (35) der gefalzten Druckwölbung (28) außen angeordnet ist,
- ein Blockiersystem (55) der gefalzten Druckwölbung (28) in Bezug auf den Endwölbung (50), das Blockiersystem (55) umfassend eine gekrümmte Halteanordnung (100), die radial zwischen dem Endbereich (35) der gefalzten Druckwölbung (28) und dem vorderen Bördelflansch (87) montiert ist, **dadurch gekennzeichnet, dass** die Halteanordnung (100) mindestens zwei getrennte Umfangselemente (104), vorzugsweise mindestens drei getrennte Umfangselemente (104), aufweist.

2. - Anschlussstück (14) nach Anspruch 1, wobei jedes Umfangselement (104) die Form einer gebogenen Platte aufweist.

3. - Anschlussstück (14) nach Anspruch 1 oder 2, wobei die Umfangselemente (104) entlang des Umfangs eines gleichen Querschnitts der gefalzten Druckwölbung (28) verteilt sind.

4. - Anschlussstück (14) nach einem der Ansprüche 1 bis 3, wobei die Umfangselemente (104) auf der gefalzten Druckwölbung (28) in Umfangsrichtung um höchstens 10 Millimeter voneinander beabstandet sind.

5. - Anschlussstück (14) nach einem der Ansprüche 1 bis 4, wobei die Umfangselemente (104) aus Kohlenstoffstahl gefertigt sind.

6. - Anschlussstück (14) nach einem der vorherigen Ansprüche, wobei die gefalzten Druckwölbung (28) mindestens eine Nut (33) umfasst, die Halteanordnung (100) umfassend Rippen (106), die komplementär zu der Nut (33) sind.

7. - Anschlussstück (14) nach Anspruch 6, wobei die Rippen (106) der Halteanordnung (100) unverschraubt in die Nut (33) der gefalzten Druckwölbung (28) eingesetzt sind.

8. - Anschlussstück (14) nach einem der vorherigen Ansprüche, wobei das Blockiersystem (55) Elemente (102) zur axialen Verriegelung der Halteanordnung (100) an dem vorderen Bördelflansch (87) umfasst, vorteilhafterweise ausgewählt aus Bolzen, Gewindestiften, Schrauben mit flachem Ende und Schrauben mit napfförmigem Ende.

9. - Anschlussstück (14) nach einem der vorherigen Ansprüche, wobei das Blockiersystem (55) einen Haltering (115; 215) umfasst, der zwischen der gefalzten Druckwölbung (28) und dem vorderen Bördelflansch (87) angeordnet ist und mit der Halteanordnung (100) in Kontakt ist.

10. - Anschlussstück (14) nach Anspruch 9, wobei der Haltering (215) mit der gefalzten Druckwölbung (28) eine Halteaufnahme (220) für die Halteanordnung (100) bildet, wobei die Halteanordnung (100) in die Halteaufnahme (220) eingeführt ist.

11. - Flexible Leitung (2), umfassend:
- mindestens einen Druckmantel (20),
- mindestens eine gefalzten Druckwölbung (28), die in Bezug auf den Druckmantel (20) außen angeordnet ist,
- mindestens eine Zugbewehrungsschicht (24, 25), die in Bezug auf die gefalzten Druckwölbung (28) außen angeordnet ist, wobei die Bewehrungsschicht (24, 25) eine Vielzahl von Bewehrungselementen (29) umfasst,
- mindestens ein Anschlussstück (14) nach einem der vorherigen Ansprüche.

12. - Verfahren zur Montage eines Anschlussstücks (14) nach einem der Ansprüche 1 bis 10, das Verfahren umfassend:
- Bereitstellen des Endbereichs (35) der gefalzten Druckwölbung (28), die um den Druckmantel (20) herum angeordnet ist,
- Anbringen des vorderen Bördelflanschs (87) um den Endbereich (35) der gefalzten Druckwölbung (28),
- Montieren des vorderen Bördelflansches (87) an der Endwölbung (50), **dadurch gekennzeichnet, dass** das Verfahren ferner ein Montieren des Blockiersystems (55) der gefalzten Druckwölbung (28) in Bezug auf die Endwölbung (50) umfasst, das Blockiersystem (55) die gekrümmte Halteanordnung (100) umfasst, die radial zwischen dem Endbereich (35) des gefalzten Druckwölbung (28) und dem vorderen Bördelflansch (87) montiert ist, wobei die Halteanordnung (100) die mindestens zwei getrennten Umfangselemente (104) aufweist, wobei das Verfahren das schraubenlose Anbringen jedes Umfangselements (104) an der gefalzten Druckwölbung (28) umfasst.

## Claims

1. A connection tip (14) for a flexible fluid transport line (2), the flexible line (2) comprising a pressure sheath (20), an interlocked pressure vault (28) arranged outwardly relative to the pressure sheath (20) and at least one tensional reinforcement layer (24, 25) arranged outwardly relative to the interlocked pressure vault (28), the reinforcement layer (24, 25) comprising a plurality of reinforcement elements (29), the tip (14) comprising:
- an end region of the pressure sheath (20),
- an end region (35) of the interlocked pressure vault (28),
- at least one end segment (34) of each armor element (29),
- an end vault (50) and a cover (51) fastened on the end vault (50), the end vault (50) and the cover (51) defining a chamber (52) between them for receiving each end segment (34) of the reinforcement elements (29),
- a front crimping flange (87) of the pressure sheath (20), the front crimping flange (87) being attached on the end vault (50) and arranged outwardly relative to the end region (35) of the interlocked pressure vault (28),
- a system (55) for locking the interlocked pressure vault (28) relative to the end vault (50),
the locking system (55) comprising an inwardly curved holding assembly (100) that is radially mounted between the end region (35) of the interlocked pressure vault (28) and the front crimping flange (87), **characterized in that** the holding assembly (100) comprises at least two separate circumferential members (104), preferably at least three separate circumferential members (104).

2. The tip (14) according to claim 1, wherein each circumferential member (104) is in the form of a curved plate.

3. The tip (14) according to claim 1 or 2, wherein the circumferential members (104) are distributed along the perimeter of a same cross-section of the interlocked pressure vault (28).

4. The tip (14) according to any one of claims 1 to 3, wherein the circumferential members (104) are spaced circumferentially apart from one another on the interlocked pressure vault (28) by no more than 10 millimeters.

5. The tip (14) according to any one of claims 1 to 4, wherein the circumferential members (104) are made from carbon steel.

6. The tip (14) according to any one of the preceding claims, wherein the interlocked pressure vault (28) comprises at least one groove (33), the holding assembly (100) comprising ribs (106) complementary to the groove (33).

7. The tip (14) according to claim 6, wherein the ribs (106) of the holding assembly (100) are inserted without being screwed in the groove (33) of the interlocked pressure vault (28).

8. The tip (14) according to any one of the preceding claims, wherein the locking system (55) includes members (102) for axially locking the holding assembly (100) on the front crimping flange (87) advantageously chosen from among bolts, headless screws, blunt end screws, and cup-point screws.

9. The tip (14) according to any one of the preceding claims, wherein the locking system (55) comprises a holding ring (115; 215) arranged between the interlocked pressure vault (28) and the front crimping flange (87) and in contact with the holding assembly (100).

10. The tip (14) according to claim 9, wherein the holding ring (215) forms, with the interlocked pressure vault (28), a housing (220) for maintaining the holding assembly (100), the holding assembly (100) being inserted into the maintaining housing (220).

11. A flexible line (2), comprising:
- at least one pressure sheath (20),
- at least one interlocked pressure vault (28) arranged outwardly relative to the pressure sheath (20),
- at least one tensional reinforcement layer (24, 25) arranged outwardly relative to the interlocked pressure vault (28), the reinforcement layer (24, 25) comprising a plurality of reinforcement elements (29),
- at least one tip (14) according to any one of the preceding claims.

12. A method for mounting a tip (14) according to any one of claims 1 to 10, the method comprising:
- providing the end region (35) of the interlocked pressure vault (28) arranged around the pressure sheath (20),
- placing the front crimping flange (87) around the end region (35) of the interlocked pressure vault (28),
- mounting the front crimping flange (87) on the end vault (50),
**characterized in that** the method further comprises mounting the system (55) for locking the interlocked pressure vault (28) relative to the end vault (50), the locking system (55) comprising the inwardly curved holding assembly (100) that is radially mounted between the end region (35) of the interlocked pressure vault (28) and the front crimping flange (87), the holding assembly (100) comprising the at least two separate circumferential members (104), the method comprising pressing, without screwing, each circumferential member (104) on the interlocked pressure vault (28)..
